# EUROPÄISCHE PATENTSCHRIFT

(11) **EP 2 252 486 B1**
(45) Veröffentlichungstag und Bekanntmachung des Hinweises auf die Patenterteilung: **20.08.2014**
(21) Anmeldenummer: 08872304.4
(22) Anmeldetag: 12.11.2008
(51) Int. Cl.: B60S 1/08

(54) **ELEKTRONISCHE SELBSTHEMMUNG FÜR EINE SCHEIBENWISCHVORRICHTUNG**
ELECTRONIC SELF-LOCKING DEVICE FOR A WINDSCREEN WIPING DEVICE
BLOCAGE AUTOMATIQUE ÉLECTRONIQUE POUR UN DISPOSITIF ESSUIE-GLACE

(30) Priorität: 14.02.2008 DE 102008000298
(43) Veröffentlichungstag der Anmeldung: 24.11.2010
(73) Patentinhaber: Robert Bosch GmbH, 70442 Stuttgart (DE)
(72) Erfinder: TISCH, Florian, 77871 Renchen-Ulm (DE)
(86) Internationale Anmeldenummer: PCT/EP2008/065374
(87) Internationale Veröffentlichungsnummer: WO 2009/100785

(56) Entgegenhaltungen:
- EP-A- 0 531 793
- DE-A1- 4 417 371
- DE-A1-102005 050 774

## Beschreibung

### Stand der Technik

Die Erfindung betrifft eine Scheibenwischvorrichtung für ein Kraftfahrzeug, mit mindestens einem Wischer, einem Wischerantrieb, einer den Wischerantrieb ansteuernden elektronischen Steuerung, einem ersten Signalgeber zur Erfassung der Winkelstellung des Wischers und einer ersten Steuerleitung, mit der ein von dem ersten Signalgeber erfasstes Winkelstellungssignal der Steuerung zuführbar ist.

Scheibenwischvorrichtungen haben in verschiedenen Anwendungsgebieten, wie in der Fahrzeugtechnik, eine große Bedeutung und dienen z.B. zum Säubern der Heck- oder Windschutzscheibe eines Kraftfahrzeuges, Flugzeugs, Schiffes oder eines Schienenfahrzeugs.

Aus dem Stand der Technik sind verschiedene Realisierungen von Scheibenwischvorrichtungen bekannt. Die meisten dieser Scheibenwischvorrichtungen bestehen aus einem oder mehreren Antrieben. Meist kommt ein elektrischer Wischerantrieb zum Einsatz, welcher den Wischer direkt oder über ein Gestänge antreibt. Für eine Scheibe werden im Allgemeinen ein bis drei Wischer eingesetzt. Die Wischer sind mit Wischerblättern aus Gummi bestückt und bewegen sich in kreissegmentartigen Bahnen oder in seltenen Fällen auch linear über die Scheibe. In dem überstrichenen Bereich sollen sie die Sicht frei halten.

Aus der DE 44 17 371 A1 ist eine Scheibenwischanlage für ein Kraftfahrzeug, mit mindestens einem Wischer, einem Antrieb, einer im Ruhezustand des Antriebs wirksamen, einer Positionsänderung des Wischers entgegenwirkenden Selbsthemmung, und mit einer den Antrieb ansteuernden elektronischen Steuerung, die den Eingang von Positionssensorsignalen des Wischers erfasst bekannt. Zudem ist eine elektronisch implementierte Selbsthemmung vorgesehen ist, wobei die Steuerung den Wischer während des Ruhezustands des Antriebs durch Auswertung der Positionssensorsignale auf eine Positionsänderung hin überwacht und beim Ansprechen der Positions-Überwachung den Antrieb ansteuert, um den Wischer in eine Sollposition zurückzudrehen.

Aus der DE 10 2005 050 774 ist eine Scheibenwischvorrichtung bekannt, die eine elektronisch implementierte Selbsthemmung vorsieht, so dass es möglich ist, auf mechanische Selbsthemm-Maßnahmen bei Wischerantrieben zu verzichten. Der beschriebenen Scheibenwischvorrichtung liegt weiter der Gedanke zugrunde, dass die Anforderung an eine Selbsthemmung, nämlich einem das Fahrersichtfeld beeinträchtigenden Verdrehen des Wischers in das Sichtfeld hinein entgegenzuwirken, bereits dann entsprochen werden kann, wenn der Wischer so zeitnah nach dem Verdrehen wieder zurückgedreht wird, dass eine Störung der Sichtverhältnisse praktisch nicht eintritt. Bei der beschriebenen Scheibenwischvorrichtung überwacht die Steuerung den Wischer während des Ruhezustands des Antriebs durch Auswertung der Positionssensorsignale auf eine Positionsänderung hin. Beim Ansprechen der Positionsüberwachung steuert die Steuerung den Antrieb an, um den Wischer in eine Sollposition zurückzudrehen.

In einer Weiterbildung der beschriebenen Scheibenwischvorrichtung ist es ermöglicht, dass die elektronische Selbsthemmung, die naturgemäß auf eine Stromversorgung angewiesen ist, dabei jedoch die Fahrzeugbatterie möglichst schonen soll, auch bei abgeschalteter Zündung, etwa in einer Waschstraße, wirkt. Dazu ist die Steuerung als intern weckfähige Elektronik ausgebildet, die bei ausgeschalteter Zündung des Kraftfahrzeugs an die Fahrzeugbatterie angeschlossen ist und in einem Stand-by-Zustand ohne wirksame elektronische Selbsthemmung verbleibt, wobei sich die Steuerung im Stand-by-Zustand zyklisch selbst weckt, jeweils für eine Wachphase einen Betriebszustand mit wirksamer elektronischer Selbsthemmung annimmt und sich wieder in den Stand-by-Zustand versetzt. Auf diese Weise wird einer zuvor eingetretenen oder während der andauernden Wachphase eintretenden Positionsänderung des Wischers entgegengewirkt.

Diese Konstruktion sowie andere aus dem Stand der Technik bekannte Konstruktionen weisen im Stand-by-Zustand keine wirksame elektronische Selbsthemmung auf. Während des Stand-by-Zustandes können die Wischarme durch Missbrauch oder andere äußere Einwirkungen (z.B. Waschstrasse) aus der Parkposition in das Wischfeld geraten.

### Offenbarung der Erfindung

Die erfindungsgemäße Scheibenwischvorrichtung weist dem gegenüber den Vorteil auf, dass sie eine permanente Selbsthemmung für mindestens einen Wischer bereitstellt.

Erfindungsgemäß wird dies erreicht durch eine Scheibenwischvorrichtung für ein Kraftfahrzeug, mit mindestens einem Wischer, einem Wischerantrieb, einer den Wischerantrieb ansteuernden elektronischen Steuerung, einem ersten Signalgeber zur Erfassung der Winkelstellung des Wischers und einer ersten Steuerleitung, mit der ein von dem ersten Signalgeber erfasstes Winkelstellungssignal der Steuerung zuführbar ist, dadurch gekennzeichnet, dass ein zweiter Signalgeber zur Erfassung einer Winkeländerung des Wischers vorgesehen ist, wobei eine zweite Steuerleitung vorgesehen ist, mit der ein von dem zweiten Signalgeber erfasstes Winkeländerungssignal der Steuerung zuführbar ist, wobei eine Steuerung vorgesehen ist, wobei die Steuerung eine Selbsthemmung im Ruhezustand des Wischers ausführt, wobei bei der Selbsthemmung eine Abweichung der Winkelstellung des Wischers von der Sollstellung des Wischers durch Ansteuerung des Wischerantriebes ausgeglichen wird, wobei die Steuerung, insbesondere bei ausgeschalteter Zündung des Kraftfahrzeugs, in einen Stand-by-Zustand überführbar ist, wobei in dem Stand-by-Zustand die Energieversorgung der elektrischen Bauteile der Scheibenwischvorrichtung reduziert oder ausgeschaltet ist, in dem Stand-by-Zustand die Winkeländerung des Wischers erfasst wird und bei Überschreiten der gemessenen Winkeländerung über einen vorbestimmten Schwellwert eine Selbsthemmung des Wischers aktiviert wird.

Die Erfindung sieht damit einen zweiten Signalgeber vor, der ein Winkeländerungssignal erfasst, also vorzugsweise ein Überschreiten der gemessenen Winkeländerung über einen Schwellwert, und über eine zweite Steuerleitung der Steuerung zuführt. Grundsätzlich kann der Schwellwert vorbestimmt sein, z. B. als mechanische Fertigungstoleranz des Signalgebers. Gemäß einer bevorzugten Ausführung der Erfindung ist jedoch vorgesehen, dass der Schwellwert einstellbar ist und z. B. wenige Prozent des Drehwinkels des Wischers beträgt. Grundsätzlich kann eine Winkeländerung an einer beliebigen Position des Wischers erfasst werden. Ganz besonders ist bevorzugt, dass die Winkeländerung des Wischers ausgehend von der Sollposition des Wischers und bevorzugt ausgehend von der Parkposition des Wischers, z. B. am unteren Ende oder kurz vor dem unteren Ende des Wischwinkels, erfasst wird.

Eine bevorzugte Weiterbildung der Scheibenwischvorrichtung liegt darin, dass ein Gebermagnet vorgesehen ist, der vorzugsweise auf der Abtriebsseite des Wischerantriebs angeordnet ist, und der zweite Signalgeber als ein magnetfeldabhängiges Schaltelement ausgeführt ist. Das magnetabhängige Schaltelement wertet das Magnetfeld des Gebermagneten aus und generiert bei Überschreiten des vorab erwähnten Schwellwertes das Winkeländerungssignal.

Grundsätzlich kann der zweite Signalgeber als beliebiges Schaltelement, wie z. B. als Hall-Sensor, induktiver Sensor, optischer Sensor, Transistor und/oder Feldeffekttransistor, ausgeführt sein. Gemäß einer bevorzugten Weiterbildung der Erfindung ist das magnetfeldabhängige Schaltelement jedoch als Reed-Schaltkontakt ausgeführt. Der Reed-Schaltkontakt generiert bei Überschreiten des vorab erwähnten Schwellwertes das Winkeländerungssignal.

Eine bevorzugte Weiterbildung der Erfindung liegt darin, dass der erste Signalgeber als magnetfeldabhängiger Positionssensor ausgeführt ist. Der magnetfeldabhängige Positionssensor bestimmt durch Auswertung des Magnetfeldes des Gebermagneten die Winkelstellung des Wischers und führt das erfasste Winkelstellungssignal über die erste Steuerleitung der Steuerung zu. Der magnetfeldabhängige Positionssensor ist z. B. als Hall-Sensor ausgeführt.

Eine bevorzugte Weiterbildung der Scheibenwischvorrichtung liegt ferner darin, dass die Steuerung bei ausgeschalteter Zündung an die Fahrzeugbatterie angeschlossen ist. Auf diese Weise ist die Steuerung permanent, also z.B. in der Waschstrasse bei ausgeschaltetem Motor, mit Energie versorgt und kann den Wischer über den Wischerantrieb ansteuern.

Die Erfindung betrifft ferner ein Verfahren zum Betrieb einer mindestens einen Wischer aufweisenden Scheibenwischvorrichtung für ein Kraftfahrzeug, wobei die Winkelstellung des Wischers erfasst wird, dadurch gekennzeichnet, dass zusätzlich eine Winkeländerung des Wischers erfasst wird, und die Winkelstellung des Wischers und die Winkeländerung des Wischers einer elektronischen Steuerung zugeführt werden, wobei die Steuerung eine Selbsthemmung im Ruhezustand des Wischers ausführt, wobei bei der Selbsthemmung eine Abweichung der Winkelstellung des Wischers von der Sollstellung des Wischers durch Ansteuerung des Wischerantriebes ausgeglichen wird, und die Steuerung, insbesondere bei ausgeschalteter Zündung des Kraftfahrzeugs, in einen Stand-by-Zustand überführbar ist, wobei in dem Stand-by-Zustand die Energieversorgung der elektrischen Bauteile der Scheibenwischvorrichtung reduziert oder ausgeschaltet ist, in dem Stand-by-Zustand die Winkeländerung des Wischers erfasst wird und bei Überschreiten der gemessenen Winkeländerung über einen vorbestimmten Schwellwert die Selbsthemmung des Wischers aktiviert wird. Vorzugsweise wird die Winkeländerung des Wischers relativ zu einer oder mehreren vorgebbaren Sollpositionen oder Parkpositionen des Wischers erfasst, wobei die Winkeländerung erst nach Überschreiten eines vorgebbaren Schwellwertes erfasst wird. Vorzugsweise erfolgen die Zuführung der Winkelstellung des Wischers und die Winkeländerung des Wischers zu der elektronischen Steuerung mittels elektrischer Signalisierung über eine erste respektive eine zweite Steuerleitung. Insbesondere wird der Wischer durch die Selbsthemmung der Steuerung im Ruhezustand des Wischers aus einer nicht-regulären Stellung, z.B. bei einem das Fahrersichtfeld beeinträchtigenden Verdrehen des Wischers in das Sichtfeld hinein, durch Ansteuerung des Wischerantriebs in die Sollstellung, z.B. die Parkstellung des Wischers, gedreht. Mit anderen Worten wird während des Stand-by-Zustandes, bei der Detektion einer Winkeländerung des Wischers und bei Überschreiten der gemessenen Winkeländerung- über einen vorbestimmten Schwellwert die elektronische Steuerung in Wachphase überführt und die Selbsthemmung ausgeführt. Dadurch ist die Stromaufnahme der Selbsthemmung, insbesondere bei ausgeschalteter Zündung des Kraftfahrzeugs, reduziert. Grundsätzlich kann die Selbsthemmung permanent, also sowohl bei ein- bzw. ausgeschalteter Zündung des Kraftfahrzeugs, ausgeführt werden.

Die zuvor beschriebene Scheibenwischvorrichtung findet vorzugsweise Anwendung in der Fahrzeugtechnik, z.B. in der Kraftfahrzeugtechnik. Weitere Anwendungsgebiete liegen bei Flugzeugen, Schiffen oder bei Schienenfahrzeugen.

Nachfolgend wird die Erfindung anhand bevorzugter Ausführungsbeispiele unter Bezugnahme auf die Zeichnung im Detail beschrieben. In der Zeichnung zeigen:
Fig. 1 eine schematische Darstellung einer Scheibenwischvorrichtung gemäß einem bevorzugten Ausführungsbeispiel der Erfindung mit ihren wesentlichen Funktionsblöcken und
Fig. 2 ein Flussdiagramm zur Erläuterung einer Selbsthemmung der Scheibenwischvorrichtung bei ausgeschalteter Zündung des Kraftfahrzeugs.

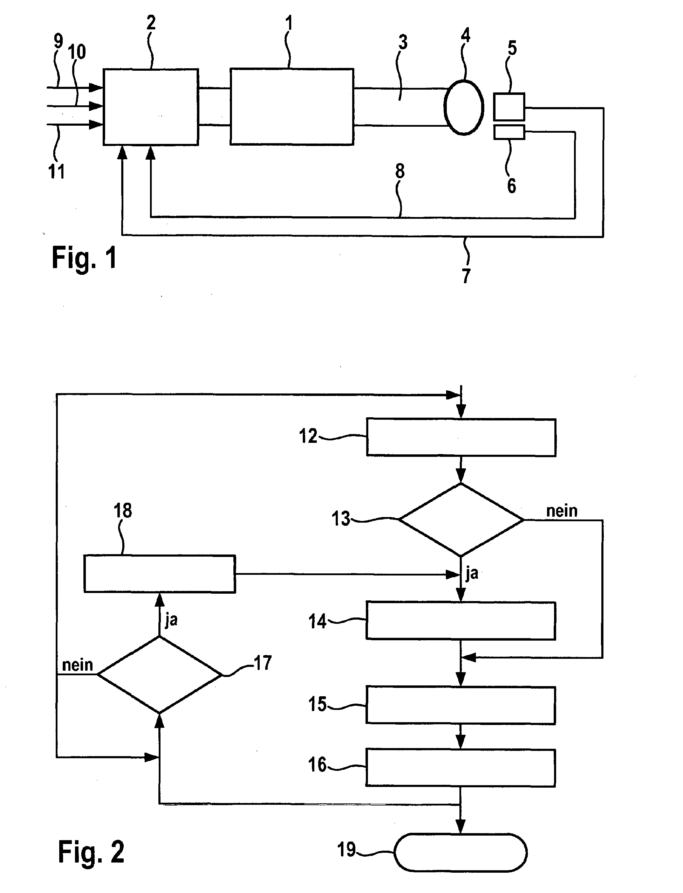

Aus Figur 1 ist eine schematische Darstellung einer Scheibenwischvorrichtung gemäß einem bevorzugten Ausführungsbeispiel der Erfindung ersichtlich. Die Scheibenwischvorrichtung dient zum Steuern eines elektrischen Wischerantriebs 1 zum Antrieb eines Wischers und weist eine Steuerung 2 auf. Der Wischerantrieb 1 kann ein nicht weiter dargestelltes Getriebe aufweisen. Über eine Abtriebswelle 3 ist drehfest zu dem Wischerantrieb 1 ein Gebermagnet 4 vorgesehen.

An der Sollposition des Wischers, z. B. in der Parkposition, sind ein magnetfeldabhängiger Positionssensor 5 und ein magnetfeldabhängiges Schaltelement 6 vorgesehen. Der magnetfeldabhängige Positionssensor 5 und das magnetfeldabhängige Schaltelement 6 werten das durch den Gebermagneten 4 erzeugte Magnetfeld aus. Gemäß dem vorliegend beschriebenen Ausführungsbeispiel ist das magnetfeldabhängige Schaltelement 6 als Reed-Schaltkontakt ausgeführt.

Der magnetfeldabhängige Positionssensor 5 sendet ein Winkelstellungssignal, das Ist-Positionssignal, über die erste Steuerleitung 7 des Wischers zur Steuerung 2. Wenn die Istposition von der Sollposition des Wischers abweicht, sendet das magnetfeldabhängige Schaltelement 6 ein Winkeländerungssignal über die zweite Steuerleitung 8 zur Steuerung 2. Die Steuerung 2 ist mit einer Stromquelle 9, vorzugsweise der Batterie des Fahrzeugs, und einem Massenpunkt 10 verbunden. Ferner kann vorgesehen sein, dass der Schwellwert der Positionsänderung 11 des maximalen Wischwinkels vorgebbar ist.

Der Wischer wird bei einer Bestromung des Wischerantriebs 1 zwischen einer unteren Umkehrlage und einer oberen Umkehrlage verschwenkt. Ferner kann eine erweiterte Parkposition vorgesehen sein, in der sich der Wischer im Ruhezustand befindet. Die erweiterte Parkposition ist vorzugsweise unterhalb oder oberhalb der unteren Umkehrlage ausgeführt.

Fährt das Fahrzeug, so wirkt der Fahrtwind auf den Wischer und drückt ihn - aufgrund der Neigung der Scheibe - nach oben. Dadurch wirkt auf die Abtriebswelle 3 ein Drehmoment. Ist der Wischerantrieb 1 nicht bestromt, so wandert der Wischer nach oben, da ohne mechanische Selbsthemmung kein eine Drehung von Anfang an verhinderndes Drehmoment wirkt. Dieser Effekt ist unerwünscht, da der Wischer dadurch in das Sichtfeld des Fahrers gerät.

Die zur Durchführung der Selbsthemmung erforderlichen Voraussetzungen stimmen im Wesentlichen mit den für die elektronische Ansteuerung des Wischerantriebs 1 erforderlichen Voraussetzungen überein. Vorteilhaft einsetzbar ist eine mikrocontrollergesteuerte Elektronik zur Erfassung von Signaleingängen, z. B. LIN-Bus (Local Interconnect Network), zur Erfassung der Positions- oder Lagesensorsignale und zur Ansteuerung einer Leistungsendstufe (z. B. H-Brückenschaltung).

Für eine wirksame elektronische Selbsthemmung wird der Wischerantrieb 1 bzw. die Steuerung 2 ständig mit Spannung versorgt. Dazu wird eine intern weckfähige Steuerung 2 (Controller im Stand-by-Zustand) zur Reduzierung der Stromaufnahme im Ruhezustand des Systems, also bei abgeschalteter Zündung, eingesetzt. Dabei wird in an sich bekannter Weise ein Teil der Steuerung 2, die Aufweck-Schaltung, auch im Stand-by-Zustand mit Spannung aus der Fahrzeugbatterie versorgt, wahrend die mehr Energie verbrauchenden Teile, wie die Überwachung des Winkelstellungssignals und die Steuerung, in einen Stand-by-Zustand versetzt sind.

Das in Figur 2 dargestellte Flussdiagramm geht von einer ausgeschalteten Zündung des Kraftfahrzeugs aus, aufgrund derer die elektronische Steuerung 2 in einen energiesparenden Stand-by-Zustand versetzt worden ist, in dem wesentliche Teile der Steuerung 2, insbesondere der Mikrocontroller, abgeschaltet beziehungsweise in einen reduzierten Betriebszustand versetzt sind. Gemäß dem folgenden Programmschritt 12 wird die Steuerung 2 durch ein mittels der Aufweck-Schaltung erfolgendes zyklisches internes Aufwecken für die Dauer einer Wachphase, in den vollen Betriebszustand versetzt. Die Zeitabstände zwischen den Wachphasen können beispielsweise etwa eine Sekunde betragen.

Gemäß dem folgenden Programmschritt 13 überprüft die Steuerung 2 in dieser beispielsweise 10 ms dauernden Wachphase, ob eine Positionsänderung, also eine Änderung des Wischwinkels des Wischers gegenüber der Sollposition, erfolgt ist. Abhängig vom Ergebnis der Positionsüberprüfung 13 erfolgt eine Verzweigung im Programmablauf des elektronischen Selbsthemm-Algorithmus.

Falls eine Positionsänderung festgestellt wird, also eine Differenz der Winkelstellung gegenüber der Sollposition, wird der Wischer durch eine im Mikrocontroller implementierte Lageregelung auf die Sollposition zurück positioniert. Dieser Schritt 14 stellt praktisch die elektronische Selbsthemmung dar. Die Ausführung dieses Schrittes 14 kann ohne Weiteres durch die Einführung eines Schwellwerts, also durch Vorgabe einer Mindest-Positionsänderung, modifiziert werden. Dieser Schwellwert der Positionsänderung 11 kann z. B. 3% des maximalen Wischwinkels betragen. Nach erfolgtem Zurückdrehen des Wischers in die Sollposition bereitet die Steuerung 2 im nächsten Programmschritt 15 die Rückkehr in den Stand-by-Zustand vor. Im darauf folgenden Programmschritt 16 nimmt die Steuerung 2 den Stand-by-Zustand an, wobei der Programmablauf gemäß dem beschrieben Ablaufdiagramm zyklisch so lange wiederholt wird, bis der Programmablauf durch Einschalten der Zündung endet. Bei eingeschalteter Zündung 19 findet dann, da genügend Energie zur Verfügung steht, abweichend vom Ablaufdiagramm gemäß Figur 2, eine kontinuierliche Überwachung bzw. Selbsthemmung des Wischers statt.

Falls im Programmschritt 13 keine Positionsänderung festgestellt wird, erfolgt keine Rückregelung gemäß Schritt 14, sondern, am Ende der normalen Wachphase, der Übergang in den Stand-by-Zustand gemäß den Programmschritten 15 und 16.

Im Stand-by-Zustand 16 wird Programmschritt 17 angestoßen, in dem kontinuierlich mittels des magnetfeldabhängigen Schaltelementes 6 geprüft wird, ob eine Bewegungsänderung des Wischers erfolgt ist. Sofern keine Bewegungsänderung detektiert wird, erfolgt nach einer vorgebbaren Zykluszeit das zyklische interne Aufwecken gemäß Programmschritt 12.

Falls Programmschritt 17 eine Bewegungsänderung detektiert, wird die Steuerung 2 durch ein mittels der Aufweck-Schaltung erfolgendes internes Aufwecken 18 für die Dauer einer Wachphase in den vollen Betriebszustand versetzt. Die Dauer der Wachphase durch ein Aufwecken mittels Programmschritt 18 kann von der Dauer der Wachphase durch ein Aufwecken mittels Programmschritt 12 variieren. Z. B. kann die Wachphase durch ein Aufwecken mittels Programmschritt 18 nur für die Zeitdauer erfolgen, die auch tatsächlich zum Zurückdrehen des Wischers in die Sollposition benötigt wird.

## Patentansprüche

1. Scheibenwischvorrichtung für ein Kraftfahrzeug, mit mindestens einem Wischer, einem Wischerantrieb (1), einer den Wischerantrieb (1) ansteuernden elektronischen Steuerung (2),
einem ersten Signalgeber zur Erfassung der Winkelstellung des Wischers, und einer ersten Steuerleitung (7), mit der ein von dem ersten Signalgeber erfasstes Winkelstellungssignal der Steuerung (2) zuführbar ist,
**dadurch gekennzeichnet, dass**
ein zweiter Signalgeber zur Erfassung einer Winkeländerung des Wischers vorgesehen ist, wobei eine zweite Steuerleitung (8) vorgesehen ist, mit der ein von dem zweiten Signalgeber erfasstes Winkeländerungssignal der Steuerung (2) zuführbar ist, **dadurch gekennzeichnet, daß** die Steuerung (2) eine Selbsthemmung im
Ruhezustand des Wischers ausführt, wobei bei der Selbsthemmung eine Abweichung der Winkelstellung des Wischers von der Sollstellung des Wischers durch Ansteuerung des Wischerantriebes (1) ausgeglichen wird und, daß
die Steuerung (2), insbesondere bei ausgeschalteter Zündung des Kraftfahrzeugs, in einen Stand-by-Zustand überführbar ist, wobei in dem Stand-by-Zustand die Energieversorgung der elektrischen Bauteile der Scheibenwischvorrichtung reduziert oder, ausgeschaltet ist, in dem Stand-by-Zustand die Winkeländerung des Wischers erfasst wird und bei Überschreiten der gemessenen Winkeländerung über einen vorbestimmten Schwellwert eine Selbsthemmung des Wischers aktiviert wird.

2. Scheibenwischvorrichtung nach Anspruch 1, wobei ein Gebermagnet (4) vorgesehen ist, der vorzugsweise auf der Abtriebsseite des Wischerantriebs (3) angeordnet ist, und der zweite Signalgeber als ein magnetfeldabhängiges Schaltelement (6) ausgeführt ist.

3. Scheibenwischvorrichtung nach Anspruch 2, **dadurch gekennzeichnet, dass** das magnetfeldabhängige Schaltelement (6) als Reed-Schaltkontakt ausgeführt ist.

4. Scheibenwischvorrichtung nach einem der Ansprüche 1 bis 3, **dadurch gekennzeichnet, dass** der erste Signalgeber als magnetfeldabhängiger Positionssensor (5) ausgeführt ist.

5. Scheibenwischvorrichtung nach einem der Ansprüche 1 bis 4, **dadurch gekennzeichnet, dass** die Steuerung (2) bei ausgeschalteter Zündung an die Fahrzeugbatterie angeschlossen ist.

6. Verfahren zum Betrieb einer mindestens einen Wischer aufweisenden Scheibenwischvorrichtung für ein Kraftfahrzeug, wobei
die Winkelstellung des Wischers erfasst wird,
zusätzlich eine Winkeländerung des Wischers erfasst wird, und
die Winkelstellung des Wischers und die Winkeländerung des Wischers einer elektronischen Steuerung (2) zugeführt werden, **dadurch gekennzeichnet, dass** die Steuerung (2) eine Selbsthemmung im Ruhezustand des Wischers ausführt, wobei bei der Selbsthemmung eine Abweichung der Winkelstellung des Wischers von der Sollstellung des Wischers durch Ansteuerung des Wischerantriebes (1) ausgeglichen wird, und
dass die Steuerung (2), insbesondere bei ausgeschalteter Zündung des Kraftfahrzeugs, in einen Stand-by-Zustand überführbar ist, wobei in dem Stand-by-Zustand die Energieversorgung der elektrischen Bauteile der Scheibenwischvorrichtung reduziert oder ausgeschaltet ist, in dem Stand-by-Zustand die Winkeländerung des Wischers erfasst wird und bei Überschreiten der gemessenen Winkeländerung über einen vorbestimmten Schwellwert die Selbsthemmung des Wischers aktiviert wird.

## Claims

1. Windscreen wiping device for a motor vehicle, having
at least one wiper, a wiper drive (1), an electronic control means (2) which actuates the wiper drive (1),
a first signal transmitter for recording the angular position of the wiper, and
a first control line (7) which can be used to feed an angular position signal, which is recorded by the first signal transmitter, to the control means (2), **characterized in that**
a second signal transmitter is provided for recording a change in angle of the wiper, wherein a second control line (8) is provided, it being possible to use this second control line to feed a change-in-angle signal, which is recorded by the second signal transmitter, to the control means (2), **characterized in that** the control means (2) implements self-locking in the inoperative state of the wiper, wherein, in the event of self-locking, a deviation in the angular position of the wiper from the setpoint position of the wiper is compensated for by actuating the wiper drive (1), and **in that** the control means (2) can be changed over to a standby state, in particular when the ignition of the motor vehicle is switched off, wherein the power supply to the electrical components of the windscreen wiping device is reduced or switched off in the standby state, the change in angle of the wiper is recorded in the standby state, and self-locking of the wiper is activated when the measured change in angle exceeds a predetermined threshold value.

2. Windscreen wiping device according to Claim 1, wherein a transmitter magnet (4) is provided, said transmitter magnet preferably being arranged on the output side of the wiper drive (3), and the second signal transmitter being designed as a magnetic field-dependent switching element (6).

3. Windscreen wiping device according to Claim 2, **characterized in that** the magnetic field-dependent switching element (6) is designed as a reed contact switch.

4. Windscreen wiping device according to one of Claims 1 to 3, **characterized in that** the first signal transmitter is designed as a magnetic field-dependent position sensor (5).

5. Windscreen wiping device according to one of Claims 1 to 4, **characterized in that** the control means (2) is connected to the vehicle battery when the ignition is switched off.

6. Method for operating a windscreen wiping device, which has at least one wiper, for a motor vehicle, wherein
the angular position of the wiper is recorded,
a change in angle of the wiper is additionally recorded, and
the angular position of the wiper and the change in angle of the wiper is fed to an electronic control means (2), **characterized in that** the control means (2) implements self-locking in the inoperative state of the wiper, wherein, in the event of self-locking, a deviation in the angular position of the wiper from the setpoint position of the wiper is compensated for by actuating the wiper drive (1), and **in that** the control means (2) can be changed over to a standby state, in particular when the ignition of the motor vehicle is switched off, wherein the power supply to the electrical components of the windscreen wiping device is reduced or switched off in the standby state, the change in angle of the wiper is recorded in the standby state, and self-locking of the wiper is activated when the measured change in angle exceeds a predetermined threshold value.

## Revendications

1. Dispositif essuie-glace pour un véhicule automobile, avec :
au moins un essuie-glace, un entraînement d'essuie-glace (1), un élément de commande électronique (2) excitant l'entraînement d'essuie-glace (1) ;
un premier émetteur de signaux servant à détecter la position angulaire de l'essuie-glace ; et
un premier câble de commande (7) à l'aide duquel un signal de position angulaire détecté par le premier émetteur de signaux peut être amené à l'élément de commande (2) ;
**caractérisé en ce que** :
un deuxième émetteur de signaux servant à détecter un changement d'angle de l'essuie-glace est prévu, un deuxième câble de commande (8) étant prévu à l'aide duquel un signal de changement d'angle détecté par le deuxième émetteur de signaux peut être amené à l'élément de commande (2) ;
**caractérisé en ce que** l'élément de commande (2) exécute un blocage automatique dans l'état de repos de l'essuie-glace et qu'en cas de blocage automatique, un écart de la position angulaire de l'essuie-glace par rapport à la position théorique de l'essuie-glace est compensée par excitation de l'entraînement d'essuie-glace (1) et ; que
l'élément de commande (2) peut être amené dans un état de veille, notamment en cas d'allumage déconnecté du véhicule automobile, l'alimentation en énergie des composants électriques du dispositif essuie-glace étant réduite ou déconnectée dans l'état de veille, le changement d'angle de l'essuie-glace étant détecté dans l'état de veille et un blocage automatique de l'essuie-glace étant activé en cas de dépassement du changement d'angle mesuré au-delà d'une valeur seuil prédéterminée.

2. Dispositif essuie-glace selon la revendication 1, un aimant d'émetteur (4) étant prévu et disposé de préférence sur le côté d'entraînement en sortie de l'entraînement d'essuie-glace (3) et le deuxième émetteur de signaux prenant la forme d'un élément de connexion (6) dépendant du champ magnétique.

3. Dispositif essuie-glace selon la revendication 2, **caractérisé en ce que** l'élément de connexion (6) dépendant du champ magnétique prend la forme d'un contact de connexion de Reed.

4. Dispositif essuie-glace selon l'une quelconque des revendications 1 à 3, **caractérisé en ce que** le premier émetteur de signaux prend la forme d'un capteur de position (5) dépendant du champ magnétique.

5. Dispositif essuie-glace selon l'une quelconque des revendications 1 à 4, **caractérisé en ce que** l'élément de commande (2) est raccordé à la batterie de véhicule en cas d'allumage déconnecté.

6. Procédé de fonctionnement d'un dispositif essuie-glace pour un véhicule automobile comportant au moins un essuie-glace ;
la position angulaire de l'essuie-glace étant détectée ;
un changement d'angle de l'essuie-glace étant en outre détecté ; et
la position angulaire de l'essuie-glace et le changement d'angle de l'essuie-glace étant amenés à l'élément de commande électronique (2) ;
**caractérisé en ce que** :
l'élément de commande (2) exécute un blocage automatique dans l'état de repos de l'essuie-glace et qu'en cas de blocage automatique, un écart de la position angulaire de l'essuie-glace par rapport à la position théorique de l'essuie-glace étant compensée par excitation de l'entraînement d'essuie-glace (1) ; et
l'élément de commande (2) peut être amené dans un état de veille, notamment en cas d'allumage déconnecté du véhicule automobile, l'alimentation en énergie des composants électriques du dispositif essuie-glace étant réduite ou déconnectée dans l'état de veille, le changement d'angle de l'essuie-glace étant détecté dans l'état de veille et un blocage automatique de l'essuie-glace étant activé en cas de dépassement du changement d'angle mesuré au-delà d'une valeur seuil prédéterminée.
